# EUROPÄISCHE PATENTSCHRIFT

(11) **EP 3 763 238 B1**
(45) Veröffentlichungstag und Bekanntmachung des Hinweises auf die Patenterteilung: **01.09.2021**
(21) Anmeldenummer: 19185016.3
(22) Anmeldetag: 08.07.2019
(51) Int. Cl.: A44B 11/25, B60R 22/48

(54) **GURTSCHLOSS, GURTSCHLOSSSYSTEM UND FLUGZEUGSICHERHEITSGURT**
BELT LOCK, BELT LOCK SYSTEM AND AIRCRAFT SAFETY BELT
FERMETURE DE CEINTURE, SYSTÈME DE FERMETURE DE CEINTURE ET CEINTURE DE SÉCURITÉ POUR AVION

(43) Veröffentlichungstag der Anmeldung: 13.01.2021
(73) Patentinhaber: Aircraft Cabin Modification GmbH, 87700 Memmingen (DE)
(72) Erfinder: BEERMANN, Andreas, 87700 Memmingen (DE)
(74) Vertreter: Vossius & Partner Patentanwälte Rechtsanwälte mbB

(56) Entgegenhaltungen:
- EP-A2- 3 170 704
- US-A- 3 203 064
- US-A- 3 242 547
- US-A- 3 273 214
- US-A- 3 425 103

## Beschreibung

Die vorliegende Erfindung betrifft ein Gurtschloss für einen Flugzeugsicherheitsgurt, ein Gurtschlosssystem für einen Flugzeugsicherheitsgurt und einen Flugzeugsicherheitsgurt.

Flugzeugsicherheitsgurte sind ein essenzieller Bestandteil von Flugzeugsitzen in der zivilen Luftfahrt. Insbesondere bei Passagierflugzeugen ist es vorgeschrieben, dass sich jeweilige Passagiere an ihren Sitzen anschnallen können. Dadurch können Verletzungen bei Turbulenzen und Unfällen vermieden oder reduziert werden. Dabei gibt es hohe Belastungsanforderung an den Flugzeugsicherheitsgurt und insbesondere dessen Gurtschloss. Beispielsweise müssen diese für eine Kraft von bis zu 13 kN ausgelegt werden. Gleichzeitig ist es jedoch wichtig, dass die Flugzeugsicherheitsgurte ein möglichst geringes Gewicht haben. Erst dadurch ist ein effizienter Betrieb eines Passagierflugzeugs möglich. Beispielsweise sollte ein Gurtschloss eines Flugzeugsicherheitsgurts ein Gewicht von ca. 80 g nicht überschreiten.

Zudem ist es erforderlich, dass Flugzeugsicherheitsgurte an die Größe der jeweiligen Passagiere, welche sie zurückhalten sollen, angepasst werden können. Beispielsweise können jeweilige Passagiere einen unterschiedlichen Bauchumfang aufweisen, wobei der Flugzeugsicherheitsgurt dennoch möglichst spielfrei am angeschnallten Passagier anliegen sollte. Deswegen ist es üblicherweise bei Flugzeugsicherheitsgurten vorgesehen, dass wenigstens eine Länge eines Endes des Flugzeugssicherheitsgurts verstellbar ist. Zu diesem Zweck kann beispielsweise ein Gurtschloss entlang eines Gurtbandes verschoben werden, um dessen Position zu verstellen. Dies kann auch alternativ dahingehend verstanden werden, dass das Gurtband entlang des Gurtschlosses verschoben werden kann. So kann eine Distanz zwischen dem Gurtschloss und einer Sitzverankerung desjenigen Gurtbands, an welchem das Gurtschloss gehalten ist, verändert werden.

Auch hier können sich gegensätzliche Anforderungen an den Flugzeugsicherheitsgurt bzw. dessen Gurtschloss ergeben. Zum einen ist es gewünscht, dass die Länge des Flugzeugsicherheitsgurtes möglichst schnell und einfach verstellbar ist, um den Komfort und die Akzeptanz durch die jeweiligen Passagiere für ein Anschnallen zu erhöhen. Aufgrund der gegebenenfalls jedoch großen auftretenden Belastungen des Flugzeugsicherheitsgurts ist es gleichzeitig erforderlich, dass das Gurtschloss und das Gurtband bei der eingestellten Länge des Flugzeugsicherheitsgurts sicher auch bei hohen Belastungen an ihrer jeweiligen Position relativ zueinander verbleiben.

Aus der US 5,088,160 ist beispielsweise ein Gurtschloss für ein Flugzeugsicherheitsgurt mit einer einstellbaren Länge bekannt. Dort wird vorgeschlagen, eine Vielzahl von gerundeten Ecken vorzusehen, um ein Gurtband in einer eingestellten Position sicher zu klemmen. Dafür ist jedoch eine komplizierte, schwere und teuer herzustellende Halterung des Gurtbands an dem Gurtschloss erforderlich Ein weiteres Beispiel ist das Gurtschloss mit Längeneinstellung aus der US 3,242,547.

Aufgabe der vorliegenden Erfindung ist es, ein Gurtschloss für einen Flugzeugsicherheitsgurt, ein Gurtschlosssystem und einen Flugzeugsicherheitsgurt zu verbessern. Insbesondere ist es Aufgabe der vorliegenden Erfindung, ein leichtes, einfaches und kostengünstiges Gurtschloss zu schaffen, mittels welchem ein längenverstellbarer Flugzeugsicherheitsgurt bereitgestellt werden kann.

Die Aufgabe wird erfindungsgemäß jeweils durch die Gegenstände der unabhängigen Patentansprüche gelöst. Vorteilhafte Ausgestaltungen mit zweckmäßigen Weiterbildungen der Erfindung sind in den jeweiligen Unteransprüchen angegeben, wobei vorteilhafte Ausgestaltungen eines Aspekts als vorteilhafte Ausgestaltungen jeweiliger anderer Aspekte und umgekehrt anzusehen sind.

Ein erster Aspekt der Erfindung betrifft ein Gurtschloss für einen Flugzeugsicherheitsgurt. Das Gurtschloss kann einen Hauptkörper, welcher einen Aufnahmeraum zum wenigstens teilweisen Aufnehmen einer Schlosszunge des Flugzeugsicherheitsgurtes definiert, aufweisen. In den Aufnahmeraum kann eine korrespondierende Schlosszunge eingeführt werden, um den Sicherheitsgurt zu schließen. Der Aufnahmeraum kann auch als Innenraum des Hauptkörpers betrachtet werden, wobei dieser vorzugsweise jedoch nicht vollständig geschlossen ist.

Weiterhin kann das Gurtschloss eine Halterung, welche zum Befestigen eines Gurtbands des Flugzeugsicherheitsgurtes durch deren Umschlingen ausgebildet ist, aufweisen. Eine Länge des Flugzeugsicherheitsgurts ist vorzugsweise durch Verschieben des Gurtbands an der Halterung einstellbar. Beispielsweise kann die Halterung ein Stabelement aufweisen, um welches das Gurtband wenigstens bereichsweise geschlungen ist. An der Halterung ist das Gurtband beispielsweise durch Reibung und/oder Klemmung in Position gehalten. Eine Einstellbarkeit der Länge des Flugzeugsicherheitsgurtes kann bedingen, dass eine Arretierung, wie beispielsweise eine Klemmung, des Gurtbands an der Halterung gelöst werden kann, damit das Gurtband entlang der Halterung gleiten kann. Anschließend kann das Gurtband an der Halterung arretiert werden, beispielsweise durch eine Klemmung. Vorzugsweise ist eine Klemmung des Gurtbandes an der Halterung selbstarretierend. Bei einem geschlossenen Flugzeugsicherheitsgurt ist dann eine Position des Gurtbands an der Halterung automatisch festgelegt. Nur durch ein Betätigen und/oder Bewegen des Gurtschlosses, beispielsweise durch ein Neigen relativ zu dem Gurtband und/oder ein Öffnen des Flugzeugsicherheitsgurtes, wird die Verschiebbarkeit und damit die Längenverstellung ermöglicht.

Weiterhin kann das Gurtschloss eine Verriegelungsvorrichtung aufweisen, welche dazu ausgebildet ist, die Schlosszunge in einer wenigstens teilweise in den Aufnahmeraum eingeführten Position an dem Hauptkörper zum Schließen des Flugzeugsicherheitsgurts zu verrasten. Diese Verrastung ist vorzugsweise lösbar ausgebildet, um den Flugzeugsicherheitsgurt auch wieder öffnen zu können. Durch ein Verrasten der Schlosszunge mit dem Gurtschloss kann ein Passagier mit dem Flugzeugsicherheitsgurt durch dessen Schließen angeschnallt werden. Dabei ist es vorzugsweise vorgesehen, dass sowohl an dem Gurtschloss ein Gurtband als auch an der Schlosszunge ein Gurtband angeordnet ist, welche jeweils mit dem Flugzeugsitz verbunden sind und den Passagier aufgrund der Verbindung von Gurtschloss und Schlosszunge zurückhalten können.

Der Hauptkörper kann eine Grundplatte und an zwei gegenüberliegenden Seiten davon abstehende Seitenwangen aufweisen, wobei die Grundplatte und die Seitenwangen den Aufnahmeraum wenigstens teilweise begrenzen und die Grundplatte eine im Wesentlichen ebene Grundfläche bildet. Die Seitenwangen können dabei beispielsweise jeweilige Lagerstellen für die Halterung und/oder jeweiligen Betätigungselementen des Gurtschlosses und/oder jeweilige Rastelemente des Verriegelungsmechanismus bereitstellen. Zudem können die Seitenwangen den Aufhahmeraum so seitlich begrenzen, dass ein Einquetschen von Fingern des Passagiers beim Anschnallen und Abschnallen vermieden werden kann. Die Grundplatte ist vorzugsweise dafür ausgebildet, auf dem angeschnallten Passagier aufzuliegen. Die Grundplatte kann in diesem Fall im Bereich der Grundfläche eine dem Aufnahmeraum abgewandte Auflagefläche ausbilden. Die Auflagefläche kann als die Fläche, mit welcher das Gurtschloss wenigstens teilweise auf einer angeschnallten Person aufliegt, definiert sein. In diesem Sinne kann die Grundplatte auch dahingehend verstanden werden, dass sie den Aufnahmeraum unterseitig begrenzt. Die Grundplatte kann auch dahingehend verstanden werden, dass diese wenigstens bereichsweise eben ausgebildet ist und in diesem ebenen Bereich die Grundfläche auf einer dem Aufnahmeraum zugewandten Seite und die Auflagefläche auf einer dem Aufnahmeraum abgewandten Seite ausbildet. Eine ebene Grundfläche ist dabei komfortabel, stabil und kann kostengünstig zu fertigen sein. Abweichungen bezüglich einer Ebene können sich fertigungsbedingt ergeben und sind hier ebenfalls als eben zu betrachten. Beispielsweise können jeweilige Seitenwangen durch ein Tiefziehen von einer ebenen Platte gebildet werden, wobei der mittige Teil zwischen den Seitenwangen dann die Grundplatte bildet. In diesem Fall kann die Grundplatte beispielsweise auch im Bereich der ebenen Grundfläche eine leichte Wölbung aufweisen, welche sich jedoch deutlich von dem gekrümmten Übergang zu den Seitenwangen unterscheidet.

Die Halterung ist an den Seitenwangen translatorisch beweglich gelagert und eine der Halterung zugewandte Klemmkante der Grundplatte steht von der Grundfläche in Richtung der Halterung vor, wodurch die Halterung bei einer Zugbelastung des Gurtbands zu der Klemmkante gezogen und das Gurtband zwischen der Klemmkante und der Halterung geklemmt wird, womit eine Längenänderung des Flugzeugsicherheitsgurts blockiert wird. Vorzugsweise handelt es sich um eine Zugbelastung in einer Richtung zum Rückhalten eines angeschnallten Passagiers an dem Flugzeugsitz. Eine solche Bauweise ermöglicht es, eine Halterung zu verwenden, bei welcher keine sonstigen besonderen Absätze, Geometrien, Vorsprünge oder dergleichen für eine ausreichend hohe Klemmung des Gurtbands erforderlich sind. Es kann also auf eine aufwendige Geometrie bei der Halterung verzichtet werden. Beispielsweise kann stattdessen einfach ein zylindrisches Element als Halterung verwendet werden. Dennoch kann eine ausreichend große Klemmkraft aufgrund der vorstehenden Klemmkante bereitgestellt werden. Entsprechend ist das Gurtschloss einfach konstruiert, leicht und kostengünstig. Insbesondere kann durch den Vorsprung gut eine Stützkraft bzw. Klemmkraft in die Grundplatte und damit den Hauptkörper des Gurtschlosses eingeleitet werden. So können hohe Lasten gut mit einer konstruktiv einfachen und leichten Bauweise aufgenommen werden. Zudem kann eine vorstehende Klemmkante besonders einfach und kostengünstig gefertigt werden, insbesondere durch ein Umformen der Grundplatte.

Eine Längenänderung kann durch ein Verschieben des Gurtschlosses entlang einer Längserstreckung des Gurtbands einfach und intuitiv erfolgen. Die Seitenwangen können im Wesentlichen eben ausgebildet sein oder auch eine konturierte Form aufweisen. Vorzugsweise stehen die Seitenwangen näherungsweise in einem rechten Winkel von der Grundplatte bzw. dessen Grundfläche ab. Die Seitenwangen sind vorzugsweise im Wesentlichen parallel zu einer Einschubrichtung einer Schlosszunge in den Aufnahmeraum ausgebildet und/oder begrenzen diesen quer zu der Einschubrichtung. Die Halterung ist bevorzugt beweglich entlang einer Längserstreckung des Gurtschlosses an den Seitenwangen gehalten. Die Längserstreckung kann dabei einer Haupterstreckung der jeweiligen Seitenwangen und/oder der Einschubrichtung der Schlosszunge entsprechen. Der Aufnahmeraum kann ein wenigstens teilweise begrenzter Innenraum sein, in dem das Gurtband und die Haltevorrichtung wenigstens teilweise aufgenommen sind.

Die Klemmkante steht vorzugsweise in Richtung des Aufnahmeraums und/oder von einer Auflagefläche des Schlosses wegweisend vor. Insbesondere kann die Klemmkante aus der Ebene der Grundfläche vorstehen. Die Klemmkante kann an einem Rand eines gekrümmten und/oder abgewinkelten Bereichs der Grundplatte ausgebildet sein, welcher sich vorzugsweise an den die Grundfläche bildenden Bereich anschließt. Die Richtung der Zugbelastung entspricht vorzugsweise einer Zugrichtung bei einer normalen Anordnung des Gurtschlosses bzw. Anschnallgurts an einer angeschnallten Person. Das Gurtband erstreckt sich in einer solchen Position vorzugsweise im Wesentlichen als Verlängerung und/oder parallel zu der Grundfläche von dem Aufnahmeraum und/oder einer Einschuböffnung für die Schlosszunge abgewandten Seite von dem Gurtschloss weg. Die Zugbelastung wirkt vorzugsweise im Wesentlichen auch in diese Richtung.

In weiterer vorteilhafter Ausgestaltung des Gurtschlosses ist es vorgesehen, dass die Klemmkante an einer Durchgangsöffnung in der Grundplatte ausgebildet ist. Vorzugsweise wird das Gurtband hier aus dem Aufnahmeraum des Gurtbands geführt und erfährt so eine zusätzliche Klemmung, insbesondere durch eine Krümmung. Das Gurtband kann an der Klemmkante vorbei gekrümmt sein und danach zwischen der Auflagefläche und einem Körper eines angeschnallten Passagiers verlaufen. Das Gurtband kann in seiner Klemmposition bzw. einer Klemmposition des Gurtschlosses an der Auflagefläche und/oder einer der Grundfläche abgewandten Seite der Grundplatte anliegen. In einer Position zum Verschieben bzw. zur Längenänderung kann das Gurtband hier dagegen beispielsweise beabstandet sein, wobei dies jedoch nicht zwangsläufig notwendig ist. Zudem ermöglicht eine solche Bauweise ein einfaches Lösen der Klemmung des Gurtschlosses durch ein Kippen des Hauptkörpers relativ zum Gurtband. Dadurch wird ein einfaches und intuitives Lösen der Klemmung des Gurtbands an dem Gurtschloss bzw. an der Halterung ermöglicht, da eine Richtung der Zugbelastung geändert wird. Insbesondere zieht das Gurtband die Halterung so nicht mehr oder weniger stark in Richtung der Klemmkante, wodurch die Klemmung aufgehoben wird oder zumindest jeweilige Klemmkräfte reduziert werden. Entsprechend kann das Gurtband zur Längenverstellung des Flugzeugsicherheitsgurts, welcher vorliegend auch als Anschnallgurt bezeichnet wird, verschoben werden. Vorzugsweise begrenzt die Klemmkante die Durchgangsöffnung und/oder ist an dieser angeordnet.

In weiterer vorteilhafter Ausgestaltung des Gurtschlosses ist es vorgesehen, dass die Seitenwangen und die Grundplatte einstückig ausgebildet sind. Der Hauptkörper ist so besonders robust. Zudem kann das Gurtschloss so besonders leicht und kostengünstig zu fertigen sein.

In weiterer vorteilhafter Ausgestaltung des Gurtschlosses ist es vorgesehen, dass die Seitenwangen, die Grundplatte und/oder die vorstehende Klemmkante aus einem im Wesentlichen ebenen Ausgangsteil durch ein Umformen, insbesondere ein Tiefziehen und/oder Stanzen, geformt sind. Ein solcher Fertigungsprozess ist besonders einfach und kostengünstig und kann bevorzugt in einem einzigen Schritt erfolgen. Insbesondere kann die Klemmkante so besonders einfach in den Hauptkörper eingebracht werden. Vorzugsweise wird die Klemmkante simultan mit den Seitenwangen geformt, sodass auf einen zusätzlichen Fertigungsschritt verzichtet werden kann. Ein Stanzen ist besonders geeignet, um gleichzeitig eine Durchgangsöffnung an der Klemmkante zu bilden, wobei diese Durchgangsöffnung bereits vorher beschrieben wurde. Dabei kann ein Stanzwerkzeug so ausgebildet sein, dass es auch gleichzeitig einen Bereich in dem Ausgangsteil umformt, beispielsweise hochbiegt, um die vorstehenden Klemmkante zu bilden. Die Klemmkante kann bei Stanzen der Durchgangsöffnung, an welcher diese gebildet ist, geformt werden, insbesondere indem ein Bereich aus der Ebene des flachen Ausgangsteils herausgedrückt wird. Die Grundfläche der Grundplatte kann dann einem nicht umgeformten Bereich des Ausgangsteils entsprechen. Jeweilige Durchgangsöffnungen können aber auch anders eingebracht werden, beispielsweise durch Stanzen oder Bohren, während die Seitenwangen durch Tiefziehen geformt werden.

Vorzugsweise ist die Klemmkante entgratet und/oder gerundet, um eine Beschädigung eines darauf gepressten bzw. geklemmten Gurts zu vermeiden.

In weiterer vorteilhafter Ausgestaltung des Gurtschlosses ist es vorgesehen, dass die Klemmkante gerundet ausgebildet ist, insbesondere konkav oder konvex. Die gerundete Klemmkante kann höhere Klemmkräfte und/oder eine Schonung des Gurtbands ermöglichen. Eine konvexe Rundung kann eine Punktbelastung vermeiden, insbesondere bei einer Abstimmung auf einen korrespondierenden Radius der Halterung und/oder des darum geschlungenen Gurtbands. Dies kann die Lebensdauer des Flugzeugsicherheitsgurts bzw. des Gurtbands erhöhen. Eine konkave Rundung kann eine besonders starke Klemmung ermöglichen, während die Rundung eine Beschädigung aufgrund einer Zugkraft am Gurtband und/oder einem Schleifen des Gurtbands über die Klemmkante bei einer Längenänderung des Flugzeugsicherheitsgurtes vermeiden kann.

Es ist vorgesehen, dass die Halterung ein Stiftelement aufweist, welches in jeweiligen länglichen Durchgangsöffnungen der Seitenwangen translatorisch beweglich gelagert ist. Vorzugsweise ist eine Durchgangsöffnung pro Seitenwange für das Stiftelement vorgesehen, in welchen das Stiftelement mit gegenüberliegenden Endbereichen jeweils wenigstens teilweise aufgenommen ist. Vorzugsweise sind diese beiden Durchgangsöffnungen gegenüberliegend koaxial und/oder symmetrisch angeordnet. Eine solche Lagerung des Stiftelements ist einfach und kostengünstig zu fertigen und zudem sehr robust. Ein Stiftelement ist zudem besonders gut dazu geeignet, bei einer gewichtsoptimierten Bauweise dennoch hohe Kräfte aufzunehmen. Vorzugsweise ist das Stiftelement gegen Verlust, beispielsweise ein Herausrutschen, an den jeweiligen länglichen Durchgangsöffnungen gesichert. Die beiden Seitenwangen sind vorzugsweise symmetrisch zueinander, insbesondere bezüglich einer Mittelebene der Grundplatte. Ebenso kann die Grundplatte symmetrisch bezüglich der Mittelebene sein.

In weiterer vorteilhafter Ausgestaltung des Gurtschlosses ist es vorgesehen, dass ein Abstand der jeweiligen Durchgangsöffnungen der Seitenwangen orthogonal zur Grundfläche entlang der Durchgangsöffnung in einer Bewegungsrichtung der Halterung hin zur Klemmkante abnimmt. Dadurch kann ein gradueller Anstieg der Kernkraft bei erhöhte Zugbelastung des Gurtbandes erreicht werden. Dies schont das Gurtband und ermöglicht eine sichere Klemmung sowie auch ein einfaches Lösen der Klemmung. Erst bei einer Höchstbelastung, wie beispielsweise einem Unfall, ist die Klemmung so für einen Passagier gegebenenfalls schwierig zu lösen, jedoch nicht bei üblichen Zugbelastungen von An- und Abschnallvorgängen. Die Durchgangsöffnung sind beispielsweise gegenüber einer durch die Grundfläche definierten Ebene geneigt. Ein solcher Neigungswinkel liegt bevorzugt zwischen 5° und 20°.

Es ist vorgesehen, dass die Halterung eine Hülse aufweist, welche auf das Stiftelement aufgesteckt ist und welche dazu ausgebildet ist, dass das Gurtband darum geschlungen ist. Mit der Hülse kann einfach ein gewünschter Radius für das Umschlingen des Gurtbands bereitgestellt werden. Entsprechend kann einfach eine Reibkraft, welche einer Verstellung des Gurtbandes entgegenwirkt, eingestellt werden. Dies kann auch vorteilhaft bezüglich der Selbstklemmung bzw. Selbsthemmung des Gurtbandes nach Einstellen der Länge des Flugzeugsicherheitsgurtes sein. Zudem ist die Oberfläche bzw. ein Werkstoff der Hülse für das Gurtband schonend, indem ein relativ weicher und/oder glatter Kunststoff verwendet wird. Dieses Material kann bei der Hülse eingesetzt werden, da diese nur auf Druck belastet werden kann. Dagegen können durch das Stiftelement jeweilige wirkende Lasten leicht aufgenommen werden, beispielsweise indem dieses aus einem relativ stabilen Werkstoff, wie einem metallischen Werkstoff, gefertigt ist. Zudem kann die Hülse dazu verwendet werden, das Stiftelement an dem Hauptkörper bzw. den Seitenwangen gegen Verlust zu sichern. So kann auf zusätzliche Elemente und/oder Fixierelemente, welche für den Passagier weiterhin zugänglich sind, verzichtet werden. Ein Entfernen der Hülse kann durch das darum geschlungenen Gurtband verhindert werden. Zur Demontage des Gurtschlosses muss in diesem Fall beispielsweise zunächst das Gurtband von dem Flugzeugsitze gelöst werden, bevor es von der Hülse gezogen werden kann. Erst nach diesem Abziehen des Gurtbands kann dann die Hülse von dem Stiftelement gezogen und damit das Stiftelement demontiert werden. Vorzugsweise weist die Hülse eine zylindrische Mantelfläche auf, um welche das Gurtband wenigstens bereichsweise geschlungen ist und/oder welche sich zwischen den Seitenwangen erstreckt.

In weiterer vorteilhafter Ausgestaltung des Gurtschlosses ist es vorgesehen, dass die Hülse entlang ihrer Längserstreckung eine Nut aufweist, in welcher das Stiftelement aufgenommen ist. Die Nut kann beispielsweise eine zylindrische Mantelfläche der Hülse durchbrechen. Eine solche Bauweise ermöglicht eine besonders einfache und schnelle Montage des Gurtschlosses und ist besonders geeignet, um das Stiftelement an den Seitenwangen zu sichern.

Alternativ oder zusätzlich weist die Hülse eine axiale Durchgangsöffnung auf, insbesondere eine mittige axiale Durchgangsöffnung, in welcher das Stiftelement aufgenommen ist. So ist die Hülse besonders einfach und kostengünstig zu fertigen und kann zudem besonders hohe Lasten aufnehmen, insbesondere unabhängig von deren rotatorischen Orientierung bezüglich deren axialer Längsachse und dem Stiftelement.

In weiterer vorteilhafter Ausgestaltung des Gurtschlosses ist es vorgesehen, dass sich die Halterung, insbesondere das Stiftelement und/oder die Hülse, von einer Seitenwange bis zur anderen Seitenwange des Hauptkörpers erstreckt, insbesondere beabstandet von der Grundfläche. Diese Bauweise ist besonders robust. Bevorzugt ist das Stiftelement ohne aufgesteckte Hülse aus Durchgangsöffnungen in den Seitenwangen entfernbar, insbesondere durch ein Herausziehen. Bei aufgesteckter Hülse blockiert die Hülse vorzugsweise ein solches Herausziehen. Das Gurtband kann durch Umschlingen der Hülse diese an dem Stiftelement sichern, insbesondere wenn das Stiftelement in der Nut in der Hülse aufgenommen ist.

Es ist vorgesehen, dass der Hauptkörper aus einem Aluminiumwerkstoff gebildet ist. Dadurch ist der Hauptkörper robust und kann hohe Lasten aufnehmen. Ein Aluminiumwerkstoff ermöglicht einen besonders leichten Hauptkörper und ist zudem einfach zu verformen, um die vorstehende Klemmkante zu bilden. Das Stiftelement ist aus einem metallischen Werkstoff gebildet, insbesondere aus einem Aluminiumwerkstoff. So ist auch das Stiftelement leicht und robust. Ein weiteres Beispiel für geeignete metallische Werkstoffe ist Stahl, wodurch nochmals höhere Lasten als bei einem Aluminiumwerkstoff aufgenommen werden können. Die Hülse ist aus einem Kunststoff gebildet. Die Hülse kann so besonders leicht sein und das Gurtband vor Beschädigungen, insbesondere durch Reibung, schützen.

In weiterer vorteilhafter Ausgestaltung des Gurtschlosses ist es vorgesehen, dass die Verriegelungsvorrichtung ein Plattenelement, welches schwenkbar zwischen den Seitenwangen an diesen gelagert ist, und ein daran angeordnetes Rastelement, welches in eine korrespondierende Durchgangsöffnung der Schlosszunge eingreifen kann, um dieses in seiner wenigstens teilweise in den Aufnahmeraum eingeführten Position an dem Hauptkörper zum Schließen des Flugzeugsicherheitsgurts zu verrasten, aufweist. So kann ein Mechanismus bereitgestellt werden, welcher ein einfaches, intuitives und schnelles Öffnen und/oder Schließen des Flugzeugsicherheitsgurts ermöglicht. Die Verriegelungsvorrichtung ist so zudem leicht und robust. Die Verriegelungsvorrichtung ist vorzugsweise mit einem an dem Hauptkörper gelagerten Federelement in seine Verriegelungsposition vorgespannt. So kann ein ungewollt offenbleibender Anschnallgurt vermieden werden. Das Öffnen des Gurtes bzw. des Gurtschlosses kann durch ein simples Ziehen an dem Plattenelement und damit dessen Verschwenken gegenüber dem Hauptkörper bewirkt werden. Das Plattenelement begrenzt auch den Aufnahmeraum, wodurch jeweilige Benutzer vor Quetschungen geschützt werden können. Vorzugsweise kann das Plattenelement eine Seite des Aufnahmeraums abgewandt vom angeschnallten Passagier begrenzen, welche auch als Oberseite bezeichnet wird. Das Plattenelement ist vorzugsweise in einer durch das Federelement vorgespannten Position im Wesentlichen parallel zu der Grundfläche der Grundplatte ausgerichtet. Vorzugsweise ist das Plattenelement im Wesentlichen eben und/oder aus einem metallischen Werkstoff gebildet.

In weiterer vorteilhafter Ausgestaltung des Gurtschlosses ist es vorgesehen, dass das Gurtschloss eine Sensoranordnung mit einem Sensor zum Erfassen eines Schließzustand des Flugzeugsicherheitsgurts aufweist und optional einen Sender zum Übertragen des erfassten Schließzustands und/oder optional eine Stromversorgung zum Betreiben des Sensors und optional des Senders. Dadurch kann dem Kabinenpersonal die Arbeit erleichtert werden. Zudem kann so in gefährlichen Situationen sichergestellt werden, dass jeweilige Passagiere auch tatsächlich angeschnallt sind. Außerdem können durch die Erfassung des Schließzustands jeweiliger Anschnallgurte gegebenenfalls ungerechtfertigte Schadensersatzansprüche möglicherweise abgewehrt werden.

Ein zweiter Aspekt der Erfindung betrifft ein Gurtschlosssystem mit einem Gurtschloss gemäß dem ersten Aspekt der Erfindung und einem Gurtband, welches um die Halterung des Gurtschlosses geschlungen ist und vorzugsweise aus dem Aufnahmeraum des Gurtschlosses durch die Durchgangsöffnung an der Klemmkante vorbei herausgeführt ist. Durch das Umschlingen der Halterung ist das Gurtband daran befestigt. Das Gurtschlosssystem gemäß dem zweiten Erfindungsaspekt weist also ein Gurtschloss gemäß dem ersten Aspekt auf. Die sich aus dem Gurtschloss gemäß dem ersten Aspekt ergebenden Merkmale und Vorteile sind der Beschreibung des ersten Aspekts zu entnehmen, wobei vorteilhafte Ausgestaltungen des ersten Aspekts als vorteilhafte Ausgestaltungen des zweiten Aspekts und umgekehrt anzusehen sind.

Ein dritter Aspekt der Erfindung betrifft einen Flugzeugsicherheitsgurt mit einem Gurtschloss gemäß dem ersten Aspekt der Erfindung und/oder einem Gurtschlosssystem gemäß dem zweiten Aspekt der Erfindung und mit einer Schlosszunge, vorzugsweise jeweils mit einem an dem Gurtschloss und einem an der Schlosszunge befestigten Gurtband. Die jeweiligen abgewandten Enden des Gurtbands sind vorzugsweise für eine Befestigung an einem Flugzeugsitz ausgebildet. Es kann auch ein durchgehendes Gurtband genutzt werden, welches mit seinen jeweiligen Enden an Gurtschloss und Schlosszunge befestigt ist. Das Gurtband kann in diesem Fall beispielsweise mit einem Mittelbereich an dem Flugzeugsitz befestigt sein. Die Schlosszunge kann beispielsweise aus einem metallischen Werkstoff, bevorzugt einem Aluminiumwerkstoff, gefertigt sein und/oder eine Durchgangsöffnung für ein Eingreifen des Rastelements des Verriegelungsmechanismus des Gurtschlosses aufweisen. Die Schlosszunge kann beispielsweise als ebenes Element ausgebildet sein und eine weitere Durchgangsöffnung für eine Befestigung des korrespondierenden Gurtbands aufweisen.

Der Flugzeugsicherheitsgurt gemäß dem dritten Erfindungsaspekt weist also ein Gurtschloss gemäß dem ersten Aspekt und/oder ein Gurtschlosssystem gemäß dem zweiten Aspekt auf. Die sich aus dem Gurtschloss gemäß dem ersten Aspekt und dem Gurtschlosssystem gemäß dem zweiten Aspekt ergebenden Merkmale und Vorteile sind der Beschreibung des ersten bzw. zweiten Aspekts zu entnehmen, wobei vorteilhafte Ausgestaltungen des ersten bzw. zweiten Aspekts als vorteilhafte Ausgestaltungen des dritten Aspekts und umgekehrt anzusehen sind.

Weitere Vorteile, Merkmale und Einzelheiten der Erfindung ergeben sich aus der nachfolgenden Beschreibung eines bevorzugten Ausführungsbeispiels sowie anhand der Zeichnungen. Die vorstehenden in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegeben Kombination, sondern auch in anderen Kombinationen oder in Alleinstellung verwendbar, ohne den Rahmen der Erfindung zu verlassen.
- Figur 1: zeigt in einer schematischen Schnittansicht ein Gurtschloss für einen Flugzeugsicherheitsgurt mit einer Halterung zur Befestigung eines Gurtbands.
- Figur 2: zeigt in einer schematischen Oberansicht das Gurtschloss gemäß Figur 1.
- Figur 3: zeigt in einer schematischen Schnittansicht das Gurtschloss gemäß Figur 1 mit daran befestigtem Gurtband.
- Figur 4: zeigt in einer schematischen Perspektivansicht einen Hauptkörper des Gurtschlosses gemäß Figur 1.
- Figur 5: zeigt in einer schematischen Perspektivansicht ein Stiftelement einer Halterung des Gurtschlosses gemäß Figur 1.
- Figur 6: zeigt in einer schematischen Perspektivansicht eine Hülse der Halterung des Gurtschlosses gemäß Figur 1.

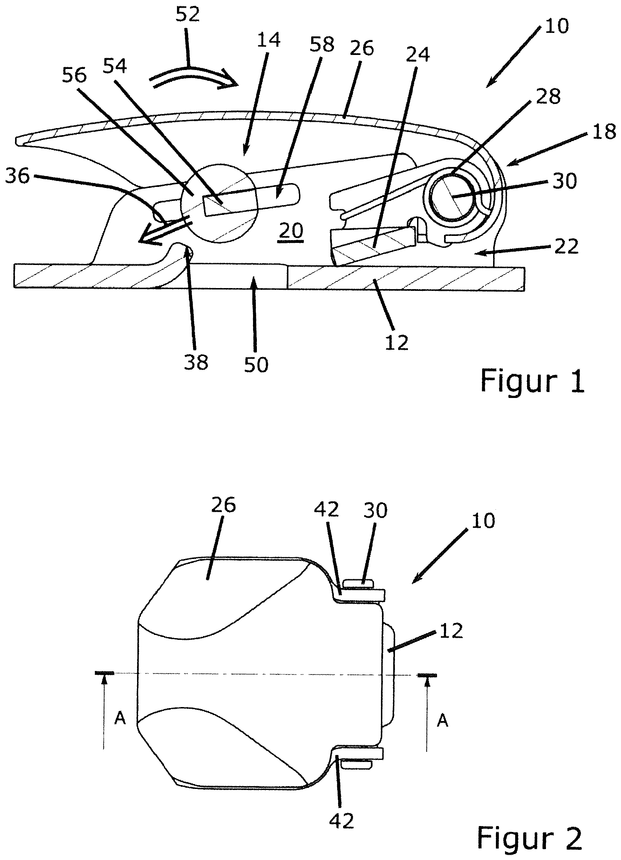

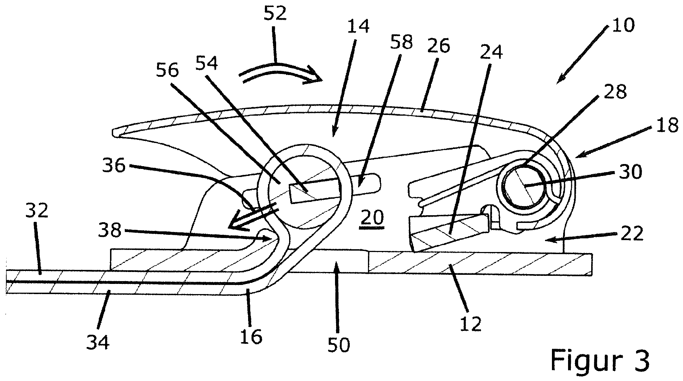

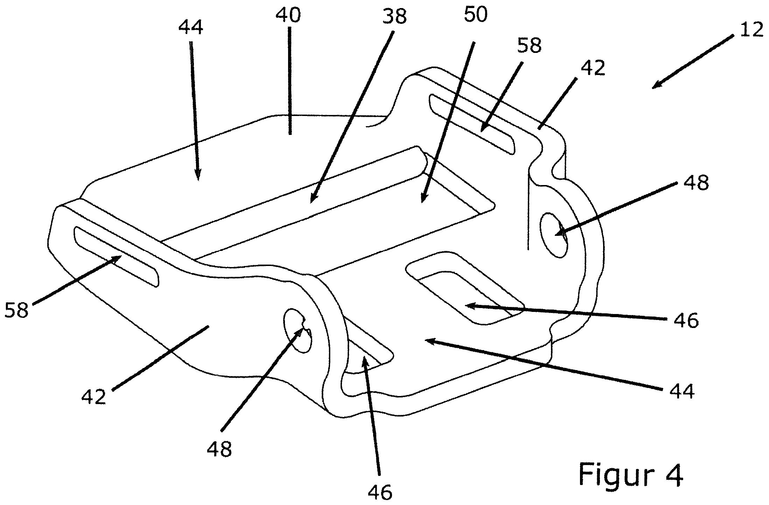

Figur 1 zeigt in einer schematischen Schnittansicht ein Gurtschloss 10 für einen Flugzeugsicherheitsgurt. Das Gurtschloss 10 weist einen Hauptkörper 12 auf, welcher isoliert ohne weitere Teile in einer schematischen Perspektivansicht in Figur 4 gezeigt ist. Weiterhin weist das Gurtschloss 10 eine Halterung 14 auf, welche zum Befestigen eines Gurtbands 16 des Flugzeugsicherheitsgurts durch deren Umschlingen ausgebildet ist. Das Gurtband 16 ist dabei in der Figur 3 um die Haltevorrichtung 14 geschlungen in einer zur Figur 1 identischen Schnittansicht gezeigt. Außerdem weist das Gurtschloss 10 eine Verriegelungsvorrichtung 18 auf, welche dazu ausgebildet ist, den Flugzeugsicherheitsgurt durch Verrasten mit einer Schlosszunge zu schließen.

Figur 2 zeigt das Gurtschloss 10 gemäß Figur 1 in einer schematischen Oberansicht und illustriert dabei den Schnitt der Figur 1 mit der gestrichelten Linie A-A. Der Hauptkörper 12 definiert einen Aufnahmeraum 20 zum wenigstens teilweisen Aufnehmen einer Schlosszunge des Flugzeugsicherheitsgurtes. Zum Schließen des Flugzeugsicherheitsgurts kann die Schlosszunge durch eine Öffnung 22 in den Aufnahmeraum 20 eingeführt werden. Nach dem Einführen der Schlosszunge verrastet ein Rastelement 24 der Verriegelungsvorrichtung 18 mit einer korrespondierenden Durchgangsöffnung in der Schlosszunge. Zum Öffnen des Flugzeugsicherheitsgurts kann ein Plattenelement 26 angehoben und um eine Lagerungsachse 30 verschwenkt werden. Damit wird auch das Rastelement 24 aus der Durchgangsöffnung der Schlosszunge gehoben und die Schlosszunge kann dann aus dem Aufnahmeraum 20 wieder herausgezogen werden. Sowohl das Plattenelement 26 als auch das Rastelement 24 sind dabei durch ein Federelement 28 in einer Verriegelungsposition vorgespannt, so dass die Schlosszunge nicht unabsichtlich entfernt bzw. der Flugzeugsicherheitsgurt nicht oder nur mit geringer Wahrscheinlichkeit unabsichtlich geöffnet werden kann.

Um den Flugzeugsicherheitsgurt an unterschiedlich große Passagiere anpassen zu können, kann das Gurtband 16 entlang seiner Längserstreckung relativ zu dem Gurtschloss 10 bzw. der Halterung 14 verschoben werden. Beispielsweise kann an einem oberen Ende 32 des Gurtbands 16 gezogen werden, um eine Länge des Flugzeugsicherheitsgurts auch bei geschlossenem Sicherheitsgurt zu verkürzen. Dieses obere Ende 32 kann auch als freies Ende des Gurtbands 16 bezeichnet werden. Ein unteres Ende 34 des Gurtbands 16 ist dagegen vorzugsweise mit einem Flugzeugsitz verbunden, um den angeschnallten Passagier daran zurückhalten zu können. Offensichtlich wird bei einem Ziehen an dem oberen Ende 32 das andere Ende 34 verkürzt. Umgekehrt kann auch an dem Gurtschloss 10 gezogen werden, so dass das obere Ende 32 in Richtung des Flugzeugssitzes gleitet und entsprechend der Flugzeugsicherheitsgurt länger eingestellt wird.

Bei dem Gurtschloss 10 sollte sowohl eine Länge des Flugzeugsicherheitsgurts einfach und intuitiv verstellbar sein als auch das Gurtband 16 in der eingestellten Position sicher an dem Gurtschloss 10 arretiert bleiben. Nur so können jeweilige hohe Kräfte zum Zurückhalten des angeschnallten Passagiers sicher aufgenommen werden. Gleichzeitig sollte das Gurtschloss 10 robust, kostengünstig und leicht sein.

Vorliegend ist zu diesem Zweck die Halterung 14 translatorisch beweglich an dem Hauptkörper 12 gelagert. Bei einem Zug auf das Gurtband 16, insbesondere das mit dem Flugzeugsitz verbundene Ende 34, wird die Halterung 14 in eine Richtung gezogen, welche durch den Pfeil 36 veranschaulicht ist. Zudem steht eine der Halterung 14 zugewandte Klemmkante 38 von einer Grundfläche einer Grundplatte des Hauptkörpers 12 vor. Bei einer Zugbelastung des Gurtbands 16 wird die Halterung 14 demnach zu der Klemmkante 38 gezogen und das Gurtband 16 zwischen der Klemmkante 38 und der Halterung 14 geklemmt. Damit wird eine Längenänderung des Flugzeugsicherheitsgurts sicher blockiert und das Gurtband 16 in seiner Position an dem Gurtschloss 10 arretiert. Insbesondere verstärkt sich die Klemmung aufgrund dieser Bauweise bei einer Erhöhung einer Zugbelastung, sodass eine Längenänderung mit geringer Kraft nicht eine Verringerung des Halts bei großen Zugkräften, wie diese bei einem Unfall auftreten können, entgegensteht.

Im Folgenden wird die beispielhafte Bauweise des Hauptkörpers 12 anhand der schematischen Perspektivansicht von Figur 4 erläutert, welche eine besonders einfache, robuste und kostengünstig herstellbare Konstruktion des Gurtschlosses 10 ermöglicht. Der Hauptkörper 12 weist eine Grundplatte 40 und an zwei gegenüberliegenden Seiten davon im rechten Winkel abstehende Seitenwangen 42 auf. Die Grundplatte 40 und die Seitenwangen 42 begrenzen dabei wenigstens teilweise den Aufnahmeraum 20. Zudem bildet die Grundplatte 40 eine im Wesentlichen ebene Grundfläche 44 aus, deren dem Aufnahmeraum 20 abgewandte Seite als Auflagefläche auf einem Körper des angeschnallten Passagiers dient. In einem vorderen, der Öffnung 22 zum Einschieben des Schlosszunge zugewandten Ende weist die Grundplatte 40 zwei Durchgangsöffnung 46 auf. Diese Durchgangsöffnungen 46 dienen zur Gewichtsreduzierung. Zudem weisen die Seitenwangen 42 zwei gegenüberliegende Durchgangsöffnungen 48 auf, in welcher die Lagerungsachse 30 des Plattenelements 26 gehalten ist.

Weiterhin weist die Grundplatte 40 eine Durchgangsöffnung 50 in einem mittleren Bereich auf, welche die Grundfläche 44 im Bereich der Halterung 14 und/oder deren Lagerung an den Seitenwangen 42 durchbricht. Wie in der Figur 3 zu erkennen ist, ist das Gurtband 16 durch die Durchgangsöffnung 50 geführt. Zudem bildet der die Durchgangsöffnung 50 begrenzende und der Öffnung 22 zum Einführen der Schlosszunge zugewandte Rand die Klemmkante 38. Durch eine Rotation des Gurtschlosses 10 um eine Längsachse der Halterung 14, wie dies in Figuren 1 und 3 durch Pfeile 52 veranschaulicht ist, kann eine Ausrichtung des Gurtbands 16 relativ zu der Klemmkante 38 bzw. der Halterung 14 verändert werden. Wenn das Gurtschloss 10 weit genug gekippt wurde, wird die Halterung 14 bei einer Zugbelastung des Gurtbands 16 nicht mehr oder zumindest weniger in Richtung der Klemmkante 38 gezogen. Entsprechend kann so die Klemmung des Gurtbands 16 gelöst werden und dieses einfach verstellt werden. Insbesondere kann eine solche Rotation des Gurtschlosses 10 auch durch ein Ziehen an dem Plattenelement 26 zum Öffnen des Gurtschlosses 10 bewirkt werden. Dadurch kann der Flugzeugsicherheitsgurt automatisch beim Öffnen verlängert werden, so dass dieser für den nächsten Passagier auch bei einer größeren Körpergröße leicht anzulegen ist.

Wie insbesondere in den Figuren 1 und 3 zu erkennen ist, steht die Klemmkante 38 von der ebenen Grundfläche 44 in Richtung des Aufnahmeraum 20 und der Halterung 14 vor. Die Klemmkante 38 bildet also eine Art Erhöhung auf der Grundplatte 40 bzw. bezüglich der Grundfläche 44. Die Klemmkante 38 wird vorliegend durch einen gekrümmten Endbereich der Grundplatte 40 gebildet. Der gekrümmte Endbereich ist dabei vorliegend gegenüber der sich daran anschließenden Grundfläche 44 gekrümmt.

Die Klemmkante 38 in der Grundplatte 40 hat mehrere Vorteile. Die Halterung 14 kann eine besonders einfache Bauweise aufweisen und kostengünstig hergestellt werden. Die Klemmkante 38 kann einstückig mit dem Hauptkörper 12 ausgebildet sein. Die Klemmkante 38 kann in einem Fertigungsschritt, beispielsweise einem Tiefziehen und/oder Stanzprozess, gemeinsam mit der Durchgangsöffnung 50 gefertigt werden. Insbesondere kann ein ebenes Ausgangsteil genutzt werden, aus welchem die Grundplatte 40 und die Seitenwangen 42 simultan und einstückig geformt werden, vorzugsweise gemeinsam mit der Durchgangsöffnung 50 und der Klemmkante 38, beispielsweise in einem kombinierten Tiefzieh- und Stanzprozess. Durch das Vorstehen der Klemmkante 38 kann eine besonders sichere Klemmung bewirkt werden. Zudem können jeweilige beim Zurückhalten des angeschnallten Passagiers wirkende Lasten besonders gut aufgenommen werden, insbesondere durch die fast ausschließliche Druckbelastung der Klemmkante 38. Diese Kräfte können dann besonders gut in den restlichen Hauptkörper 12 eingeleitet werden.

Vorliegend ist die Klemmkante 38 gerundet und entgratet ausgebildet. Insbesondere ist die Klemmkante 38 vorliegend konkav ausgebildet, sodass eine besonders starke Klemmung bewirkt werden kann. Durch die Entgratung und Rundung kann zudem eine Beschädigung des Gurtbands 16 bei einer Längenverstellung des Flugzeugsicherheitsgurts, beispielsweise durch Scheuern, besonders gut vermieden werden.

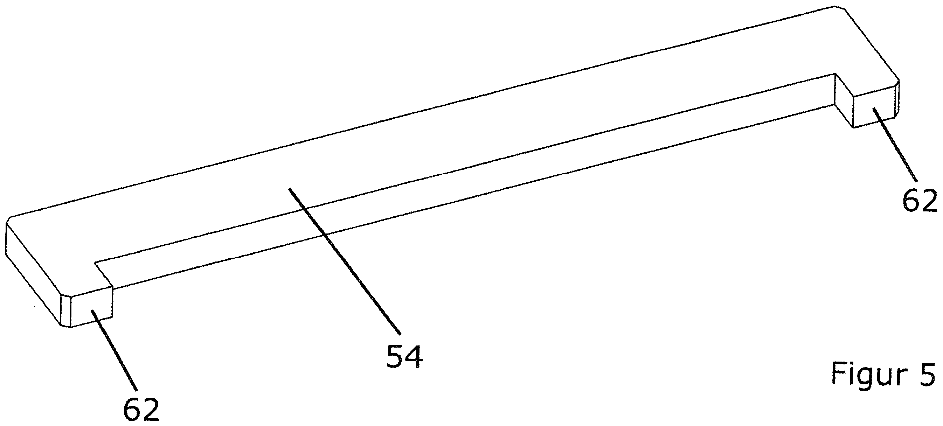

Die Halterung 14 umfasst vorliegend ein Stiftelement 54 und eine Hülse 56. Das Stiftelement 56 ist in Figur 5 in einer schematischen Perspektivansicht isoliert dargestellt. Eine Form des Stiftelements 54 korrespondiert zu zwei gegenüberliegenden länglichen Durchgangsöffnungen 58 in den beiden Seitenwangen 42. Dadurch kann das Stiftelement 54 in diesen beiden länglichen Durchgangsöffnungen 58 entlang deren längliche Erstreckung hin und her gleiten, um eine Klemmung des Gurtbands 16 zu bewirken bzw. zu lösen. Die länglichen Durchgangsöffnungen 58 sind dabei bezüglich der Ebene der Grundfläche 44 so geneigt, dass sich die Halterung der Klemmkante in einer Richtung orthogonal zu der Grundfläche 44 bei einem Verschieben in einer Ebene der Grundfläche 44 hin zur Klemmkante 38 auch in dieser Richtung annähert. Dadurch kann eine progressive Klemmung bewirkt werden. Die längliche Erstreckung der Durchgangsöffnungen 58 ist also gegenüber der Grundfläche 44 geneigt. Das Stiftelement 54 ist vorliegend aus einem metallischen Werkstoff gebildet, ebenso wie der Hauptkörper 12. Bevorzugt wird aus Gewichtsgründen ein Aluminiumwerkstoff verwendet.

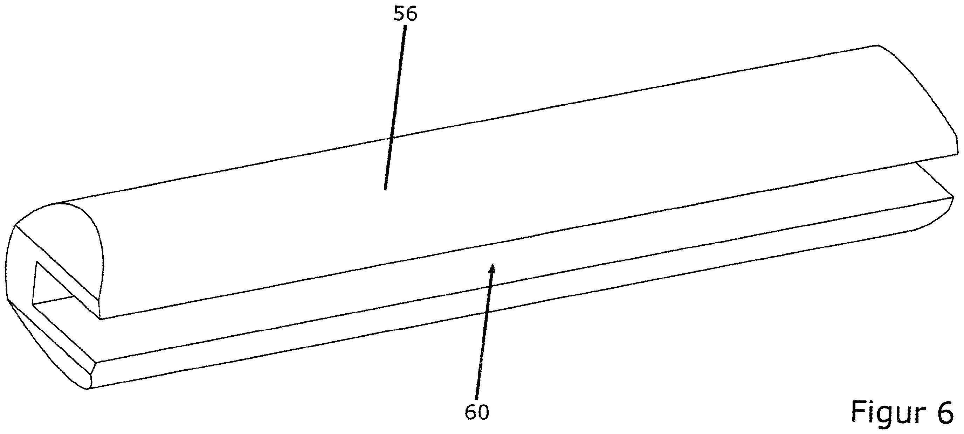

Die Hülse 56 weist eine entlang ihrer axialen Erstreckung verlaufenden Nut 60 auf, in welcher das Stiftelement 54 angeordnet werden kann. Die Hülse 56 ist in Figur 6 in einer schematischen Perspektivansicht isoliert dargestellt. In den Figuren 1 und 3 ist dagegen die Anordnung der Hülse 56 an dem Stiftelement 54 gezeigt. Die Hülse 56 ist vorliegend beispielsweise aus einem Kunststoff gebildet. Dadurch kann eine Abrasion an dem Gurtband 16 bei der Längenverstellung verringert werden, wodurch die Lebensdauer des Flugzeugsicherheitsgurts besonders hoch sein kann. Außerdem kann so das Gewicht des Gurtschlosses 10 besonders gering sein, ohne dass es zu Stabilitätsverlusten kommt. Jeweilige auf die Hülse 56 wirkenden Druckkräfte können von dieser auch bei Verwendung eines im Vergleich zu metallischen Werkstoffen weniger robusten Kunststoff gut aufgenommen werden. Im Vergleich dazu ist das Stiftelement 54 aus einem robusteren Werkstoff gebildet, da sich das Stiftelement 54 mit einem schmalen Bereich an den Durchgangsöffnungen 58 abstützen muss und hier auch auf Zug und Biegung belastet werden kann. Zudem kann die Hülse 56 durch den Einsatz des Kunststoffs vergleichsweise elastisch sein, wodurch ein Schnitt in das Gurtband 16 an der Klemmkante 38 auch bei sehr starken wirkenden Kräften zuverlässig vermieden werden kann.

Wie unmittelbar aus einem Vergleich der Figuren 5 und 6 zuerkennen ist, kann die Hülse 56 einfach auf das Stiftelement 54 mit der Nut 60 aufgesteckt werden. Insbesondere kann die Hülse 56 auf das Stiftelement 54 aufgesteckt werden, nachdem das Stiftelement 54 in die Durchgangsöffnungen 58 an dem Hauptkörper 12 bzw. den Seitenwangen 42 eingesteckt wurde. Ein Durchgleiten des Stiftelements 54 durch die Hülse 56 wird dabei durch die beiden vorstehende Bereiche 62, welche sich an dem nutfreien Bereich der Stirnflächen der Hülse 56 abstützen können, vermieden. So kann das Stiftelement 54 und damit die Halterung 14 an dem Hauptkörper 12 gesichert werden. Vorzugsweise ist eine Dicke der Hülse 56 mit dem darum geschlungenen Gurtband 16 so groß, dass das Stiftelement 54 nicht mehr ausreichend weit in Richtung der Klemmkante 38 bewegt werden kann, um dieses von der Hülse 56 und dem Hauptkörper 12 zu lösen, insbesondere weil das Stiftelement in solch einer Position noch nicht durch die länglichen Durchgangsöffnungen 58 passt. Das Gurtband 16 ist vorzugsweise auch um die Nut 60 geschlungen und sichert so die Hülse 56 an dem Stiftelement 54. Entsprechend wird also die Halterung 14 insgesamt durch das Gurtband 16 mit gesichert. Erst nachdem das Gurtband 16 aus dem Gurtschloss 10 ausgefädelt wurde, kann die Halterung 14 demontiert werden. So kann auf zusätzliche Sicherungselemente verzichtet werden.

### Bezugszeichenliste:

- 10: Gurtschloss
- 12: Hauptkörper
- 14: Halterung
- 16: Gurtband
- 18: Verriegelungsvorrichtung
- 20: Aufnahmeraum
- 22: Öffnung
- 24: Rastelement
- 26: Plattenelement
- 28: Federelement
- 30: Lagerungsachse
- 32: oberes Ende des Gurtbands
- 34: unteres Ende des Gurtbands
- 36: Pfeil
- 38: Klemmkante
- 40: Grundplatte
- 42: Seitenwangen
- 44: ebene Grundfläche
- 46: Durchgangsöffnung
- 48: Durchgangsöffnung
- 50: Durchgangsöffnung
- 52: Pfeil
- 54: Stiftelement
- 56: Hülse
- 58: längliche Durchgangsöffnung
- 60: Nut
- 62: vorstehende Bereiche

## Patentansprüche

1. Gurtschloss (10) für einen Flugzeugsicherheitsgurt, wobei das Gurtschloss (10) aufweist:
- einen Hauptkörper (12), welcher einen Aufnahmeraum (20) zum wenigstens teilweisen Aufnehmen einer Schlosszunge eines Flugzeugsicherheitsgurtes definiert;
- eine Halterung (14), welche zum Befestigen eines Gurtbands (16) des Flugzeugsicherheitsgurtes durch deren Umschlingen ausgebildet ist, wobei eine Länge des Flugzeugsicherheitsgurts durch Verschieben des Gurtbands (16) an der Halterung (14) einstellbar ist; und
- eine Verriegelungsvorrichtung (18), welche dazu ausgebildet ist, die Schlosszunge in einer wenigstens teilweise in den Aufnahmeraum (20) eingeführten Position an dem Hauptkörper (12) zum Schließen des Flugzeugsicherheitsgurts zu verrasten;
wobei der Hauptkörper (12) eine Grundplatte (40) und an zwei gegenüberliegenden Seiten davon abstehende Seitenwangen (42) aufweist, wobei die Grundplatte (40) und die Seitenwangen (42) den Aufnahmeraum (20) wenigstens teilweise begrenzen und die Grundplatte (40) eine im Wesentlichen ebene Grundfläche (44) bildet;
wobei die Halterung (14) an den Seitenwangen (42) translatorisch beweglich gelagert ist und eine der Halterung (14) zugewandte Klemmkante (38) der Grundplatte (40) von der Grundfläche (44) in Richtung der Halterung (14) vorsteht, wodurch die Halterung (14) bei einer Zugbelastung des Gurtbands (16) zu der Klemmkante (38) gezogen und das Gurtband (16) zwischen der Klemmkante (38) und der Halterung (14) geklemmt wird, womit eine Längenänderung des Flugzeugsicherheitsgurts blockiert wird;
wobei die Halterung (14) ein Stiftelement (54) aufweist, welches in jeweiligen länglichen Durchgangsöffnungen (58) der Seitenwangen (42) translatorisch beweglich gelagert ist **dadurch gekennzeichnet, dass** die Halterung (14) eine Hülse (56) aufweist, welche auf das Stiftelement (54) aufgesteckt und dazu ausgebildet ist, dass das Gurtband (16) darum geschlungen wird; und
wobei der Hauptkörper (12) aus einem Aluminiumwerkstoff, das Stiftelement (54) aus einem metallischen Werkstoff und die Hülse (56) aus einem Kunststoff gebildet ist.

2. Gurtschloss (10) nach Anspruch 1,
wobei die Klemmkante (38) an einer Durchgangsöffnung (50) in der Grundplatte (40) ausgebildet ist.

3. Gurtschloss (10) nach Anspruch 1 oder 2,
wobei die Seitenwangen (42) und die Grundplatte (40) einstückig ausgebildet sind.

4. Gurtschloss (10) nach einem der vorherigen Ansprüche,
wobei die Seitenwangen (42), die Grundplatte (40) und/oder die vorstehende Klemmkante (38) aus einem im Wesentlichen ebenen Ausgangsteil durch ein Umformen, insbesondere ein Tiefziehen und/oder Stanzen, geformt sind.

5. Gurtschloss (10) nach einem der vorherigen Ansprüche,
wobei die Klemmkante (38) gerundet ausgebildet ist, insbesondere konkav oder konvex.

6. Gurtschloss (10) nach einem der vorherigen Ansprüche,
wobei ein Abstand der jeweiligen Durchgangsöffnungen (58) der Seitenwangen (42) orthogonal zur Grundfläche (44) entlang der Durchgangsöffnung (58) in einer Bewegungsrichtung der Halterung (14) hin zur Klemmkante (38) abnimmt.

7. Gurtschloss (10) nach einem der vorherigen Ansprüche,
wobei die Hülse (56) entlang ihrer Längserstreckung eine Nut (60) aufweist, in welcher das Stiftelement (54) aufgenommen ist,
und/oder
die Hülse (56) eine axiale Durchgangsöffnung aufweist, insbesondere eine mittige axiale Durchgangsöffnung, in welcher das Stiftelement (54) aufgenommen ist.

8. Gurtschloss (10) nach einem der vorherigen Ansprüche,
wobei sich die Halterung (14), insbesondere das Stiftelement (54) und/oder die Hülse (56), von einer Seitenwange (42) bis zur anderen Seitenwange (42) des Hauptkörpers (12) erstreckt, insbesondere beabstandet von der Grundfläche (44).

9. Gurtschloss (10) nach einem der vorherigen Ansprüche,
wobei das Stiftelement (54) aus einem Aluminiumwerkstoff gebildet ist.

10. Gurtschloss (10) nach einem der vorherigen Ansprüche,
wobei die Verriegelungsvorrichtung (18) ein Plattenelement (26), welches schwenkbar zwischen den Seitenwangen (42) an diesen gelagert ist, und ein daran angeordnetes Rastelement (24) aufweist, welches in eine korrespondierende Durchgangsöffnung der Schlosszunge eingreift, um dieses in seiner wenigstens teilweise in den Aufnahmeraum (20) eingeführten Position an dem Hauptkörper (12) zum Schließen des Flugzeugsicherheitsgurts zu verrasten.

11. Gurtschloss (10) nach einem der vorherigen Ansprüche,
wobei das Gurtschloss (10) eine Sensoranordnung mit einem Sensor zum Erfassen eines Schließzustands des Flugzeugsicherheitsgurts aufweist und
optional einen Sender zum Übertragen des erfassten Schließzustands und/oder optional eine Stromversorgung zum Betreiben des Sensors und optional des Senders.

12. Gurtschloss (10) nach einem der vorherigen Ansprüche, wobei durch die vorstehende Klemmkante (38) eine Stützkraft in die Grundplatte (40) und damit in den Hauptkörper (12) eingeleitet werden kann.

13. Gurtschlosssystem mit einem Gurtschloss (10) nach einem der vorherigen Ansprüche und
einem Gurtband (16), welches um die Halterung (14) des Gurtschlosses (10) geschlungen ist und vorzugsweise aus dem Aufnahmeraum (20) des Gurtschlosses (10) durch die Durchgangsöffnung (50) an der Klemmkante (38) vorbei herausgeführt ist.

14. Flugzeugsicherheitsgurt mit einem Gurtschloss (10) nach einem der vorherigen Ansprüche und/oder einem Gurtschlosssystem nach Anspruch 13 und einer Schlosszunge, vorzugsweise jeweils mit einem an dem Gurtschloss (10) und einem an der Schlosszunge befestigtem Gurtband (16).

## Claims

1. A belt buckle (10) for an aircraft safety belt, wherein the belt buckle (10) comprises:
- a main body (12) defining a receiving space (20) for at least partially receiving a buckle tongue of an aircraft safety belt;
- a mount (14) configured for fixing a belt strap (16) of the aircraft safety belt by winding it around, wherein a length of the aircraft safety belt is adjustable by displacing the belt strap (16) on the mount (14); and
- a locking device (18) configured for latching the buckle tongue at the main body (12) in a position at least partially inserted into the receiving space (20) for closing the aircraft safety belt;
wherein the main body (12) comprises a base plate (40) and, at two opposite sides, lateral supports (42) protruding therefrom, wherein the base plate (40) and the lateral supports (42) at least partially limit the receiving space (20), and the base plate (40) forms a substantially flat base area (44);
wherein the mount (14) is translationally movably mounted at the lateral supports (42) and a clamping edge (38) of the base plate (40) facing the mount (14) protrudes from the base area (44) in the direction of the mount (14), the mount (14) thus being pulled towards the clamping edge (38) when a tensile load is applied to the belt strap (16) and the belt strap (16) being clamped between the clamping edge (38) and the mount (14), thus blocking a change in length of the aircraft safety belt;
wherein the mount (14) comprises a pin member (54) which is translationally movably mounted in respective elongate through holes (58) of the lateral supports (42), **characterized in that**
the mount (14) comprises a sheath (56) which is snapped onto the pin member (54) and configured in order for the belt strap (16) to be wound around it; and
wherein the main body (12) is formed from an aluminum material, the pin member (54) is formed from a metallic material, and the sheath (56) is formed from a plastic material.

2. The belt buckle (10) according to claim 1,
wherein the clamping edge (38) is provided at a through hole (50) in the base plate (40).

3. The belt buckle (10) according to claim 1 or 2,
wherein the lateral supports (42) and the base plate (40) are formed integrally.

4. The belt buckle (10) according to any one of the preceding claims,
wherein the lateral supports (42), the base plate (40) and/or the protruding clamping edge (38) are formed from a substantially flat parent part by means of metal forming, particularly deep drawing and/or punching.

5. The belt buckle (10) according to any one of the preceding claims,
wherein the clamping edge (38) is constructed in a rounded fashion, particularly concavely or convexly.

6. The belt buckle (10) according to any one of the preceding claims,
wherein a distance of the respective through holes (58) of the lateral supports (42) orthogonal to the base area (44) decreases along the through hole (58) in a movement direction of the mount (14) towards the clamping edge (38).

7. The belt buckle (10) according to any one of the preceding claims,
wherein along its longitudinal extension the sheath (56) comprises a notch (60) in which the pin member (54) is received,
and/or
the sheath (56) comprises an axial through hole, particularly a central axial through hole in which the pin member is received.

8. The belt buckle (10) according to any one of the preceding claims,
wherein the mount (14), particularly the pin member (54) and/or the sheath (56), extends from one lateral support (42) to the other lateral support (42) of the main body (12), particularly distanced from the base area (44).

9. The belt buckle (10) according to any one of the preceding claims,
wherein the pin member (54) is formed from an aluminum material.

10. The belt buckle (10) according to any one of the preceding claims,
wherein the locking device (18) comprises a plate member (26) which is mounted at the lateral supports (42) to be pivotable therebetween as well as a latching element (24) arranged thereat which engages a corresponding through hole of the buckle tongue in order to latch it at the main body (12) in its position that is at least partially inserted into the receiving space (20) for closing the aircraft safety belt.

11. The belt buckle (10) according to any one of the preceding claims,
wherein the belt buckle (10) comprises a sensor assembly with a sensor for detecting a state of closure of the aircraft safety belt and
optionally a transmitter for transmitting the detected state of closure and/or optionally a power supply for operating the sensor and optionally the transmitter.

12. The belt buckle (10) according to any one of the preceding claims, wherein the protruding clamping edge (38) allows for introducing a supporting force into the base plate (40) and thus into the main body (12).

13. A belt buckle system with a belt buckle (10) according to any one of the preceding claims and
a belt strap (16) which is wound around the mount (14) of the belt buckle (10) and preferably led out of the receiving space (20) of the belt buckle (10) through the through hole (50) bypassing the clamping edge (38).

14. An aircraft safety belt with a belt buckle (10) according to any one of the preceding claims and/or a belt buckle system according to claim 13 and a buckle tongue, preferably each with a belt strap (16) attached to the belt buckle (10) and a belt strap (16) attached to the buckle tongue.

## Revendications

1. Boucle de ceinture (10) pour une ceinture de sécurité d'aéronef, ladite boucle de ceinture (10) présentant :
- un corps principal (12), lequel définit un espace de réception (20) destiné à recevoir au moins partiellement une languette de bouclage d'une ceinture de sécurité d'aéronef ;
- un support (14), lequel est prévu pour la fixation d'une sangle (16) de la ceinture de sécurité d'aéronef par enroulement autour de celui-ci, une longueur de la ceinture de sécurité d'aéronef étant ajustable par poussée de la sangle (16) contre le support (14) ; et
- un dispositif de verrouillage (18), lequel est prévu pour enclencher la languette de bouclage contre le corps principal (12) dans une position d'introduction au moins partielle dans l'espace de réception (20) pour boucler la ceinture de sécurité d'aéronef ;
où le corps principal (12) comprend une plaque de base (40) et des faces latérales (42) dressées sur deux côtés opposés de celle-ci, la plaque de base (40) et les faces latérales (42) délimitant au moins partiellement l'espace de réception (20) et la plaque de base (40) formant une surface de base (44) sensiblement plane ;
où le support (14) est monté de manière à être déplaçable par translation contre les faces latérales (42), et un bord de serrage (38) de la plaque de base (40) dirigé vers le support (14) fait saillie de la surface de base (44) vers le support (14), le support (14) étant ainsi tiré vers le bord de serrage (38) en cas de contrainte de traction exercée sur la sangle (16) et la sangle (16) pincée entre le bord de serrage (38) et le support (14), une variation de longueur de la ceinture de sécurité d'aéronef étant ainsi empêchée ;
où le support (14) comprend un élément de goupille (54), lequel est monté de manière à être déplaçable par translation dans des ouvertures de passage (58) oblongues respectives des faces latérales (42), **caractérisée en ce que**
le support (14) comprend un manchon (56) fiché sur l'élément de goupille (54) et prévu pour l'enroulement de la sangle (16) ; et
le corps principal (12) est en matériau aluminium, l'élément de goupille (54) en matériau métallique et le manchon (56) en matériau synthétique.

2. Boucle de ceinture (10) selon la revendication 1,
où le bord de serrage (38) est prévu contre une ouverture de passage (50) dans la plaque de base (40).

3. Boucle de ceinture (10) selon la revendication 1 ou la revendication 2,
où les faces latérales (42) et la plaque de base (40) sont formées d'un seul tenant.

4. Boucle de ceinture (10) selon l'une des revendications précédentes,
où les faces latérales (42), la plaque de base (40) et/ou le bord de serrage (38) en saillie sont réalisés par formage à partir d'une pièce initiale sensiblement plane, en particulier par emboutissage et/ou poinçonnage.

5. Boucle de ceinture (10) selon l'une des revendications précédentes,
où le bord de serrage (38) est prévu avec un arrondi, en particulier concave ou convexe.

6. Boucle de ceinture (10) selon l'une des revendications précédentes,
où l'espacement entre les différentes ouvertures de passage (58) des faces latérales (42) orthogonales à la surface de base (44) décroît au long de l'ouverture de passage (58) dans la direction de déplacement du support (14) vers le bord de serrage (38).

7. Boucle de ceinture (10) selon l'une des revendications précédentes,
où le manchon (56) présente une rainure (60) sur son extension longitudinale, où est logé l'élément de goupille (54),
et/ou
le manchon (56) présente une ouverture de passage axiale, en particulier une ouverture de passage axiale centrale, où l'élément de goupille (54) est logé.

8. Boucle de ceinture (10) selon l'une des revendications précédentes,
où le support (14), en particulier l'élément de goupille (54) et/ou le manchon (56), s'étend d'une face latérale (42) à l'autre face latérale (42) du corps principal (12), en étant en particulier espacé de la surface de base (44).

9. Boucle de ceinture (10) selon l'une des revendications précédentes,
où l'élément de goupille (54) est en matériau aluminium.

10. Boucle de ceinture (10) selon l'une des revendications précédentes,
où le dispositif de verrouillage (18) comprend un élément en plaque (26), monté contre les faces latérales (42) de manière pivotante entre celles-ci, et un élément d'enclenchement (24) disposé sur celui-ci, lequel s'engage dans une ouverture de passage correspondante de la languette de bouclage, pour, dans sa position au moins partiellement introduite dans l'espace de réception (20), être enclenché contre le corps principal (12) pour le bouclage de la ceinture de sécurité d'aéronef.

11. Boucle de ceinture (10) selon l'une des revendications précédentes,
où ladite boucle de ceinture (10) comprend un dispositif de détection avec un capteur pour la détection d'un état de bouclage de la ceinture de sécurité d'aéronef, et, facultativement, un émetteur pour la communication de l'état de bouclage détecté et/ou, facultativement, une alimentation en courant pour l'activation du capteur et, facultativement, de l'émetteur.

12. Boucle de ceinture (10) selon l'une des revendications précédentes, où une force d'appui peut être appliquée par le bord de serrage (38) en saillie sur la plaque de base (40) et par conséquent sur le corps principal (12).

13. Système de boucle de ceinture avec une boucle de ceinture (10) selon l'une des revendications précédentes, et avec
une sangle (16), préférentiellement enroulée autour du support (14) de la boucle de ceinture (10) et préférentiellement sortie de l'espace de réception (20) de la boucle de ceinture (10) par l'ouverture de passage (50) contre le bord de serrage (38).

14. Ceinture de sécurité d'aéronef avec une boucle de ceinture (10) selon l'une des revendications précédentes et/ou un système de boucle de ceinture selon la revendication 13 et avec une languette de bouclage, préférentiellement avec une sangle (16) respectivement fixée contre la boucle de ceinture (10) et contre la languette de bouclage.
